(19) Europäisches Patentamt
European Patent Office
Office européen des brevets

(11) EP 1 889 876 A1

(12) **EUROPEAN PATENT APPLICATION**
published in accordance with Art. 153(4) EPC

(43) Date of publication:
**20.02.2008 Bulletin 2008/08**

(21) Application number: **06766409.4**

(22) Date of filing: **22.05.2006**

(51) Int Cl.:
***C08L 77/10*** *(2006.01)* ***D01F 6/60*** *(2006.01)*
***C08G 69/32*** *(2006.01)* ***C08K 5/42*** *(2006.01)*

(86) International application number:
**PCT/JP2006/310605**

(87) International publication number:
**WO 2006/126696 (30.11.2006 Gazette 2006/48)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.05.2005 JP 2005153357**
**08.09.2005 JP 2005260609**
**02.11.2005 JP 2005319411**
**31.03.2006 JP 2006097414**

(71) Applicants:
- **TEIJIN LIMITED**
  **Osaka (JP)**
- **Teijin Techno Products Limited**
  **Osaka-shi,**
  **Osaka 541-0054 (JP)**

(72) Inventors:
- **DE WEIJER, Anton P.,**
  **Iwakuni Res Center Teijin Ltd**
  **Iwakuni-shi, Yamaguchi 740-0014 (JP)**
- **CHOKAI, Masayuki,**
  **Iwakuni Res Center Teijin Ltd.**
  **Iwakuni-shi, Yamaguchi 740-0014 (JP)**
- **KUWAHARA, Hiroaki,**
  **Iwakuni Res Center Teijin Ltd.**
  **Iwakuni-shi, Yamaguchi 740-0014 (JP)**
- **HONDA, Susumu,**
  **Iwakuni Res Center, Teijin Ltd.**
  **Iwakuni-shi, Yamaguchi 740-0014 (JP)**

(74) Representative: **Heimann, Anette**
**CPW GmbH**
**Patentabteilung**
**Kasinostrasse 19-21**
**42103 Wuppertal (DE)**

# (54) DOPE FOR MOLDING

(57) The object of this invention is to provide a dope containing a polyamide having a hydroxyl-group-possessing aromatic ring, which exhibits optical anisotropy and has excellent formability, and the dope contains a polymer having a recurring unit of the following formula (I),

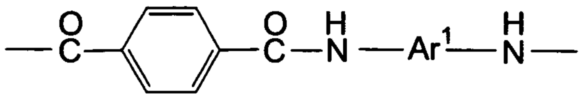

(I)

wherein $Ar^1$ is

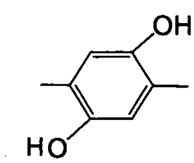

and/or

EP 1 889 876 A1

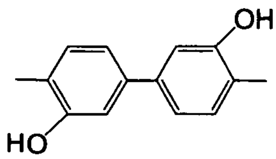

and having an inherent viscosity of 1.0 or more and a strong-acidity solvent, has a polymer concentration of 5 to 30 % by weight and exhibits optical anisotropy at 50°C.

## Description

### Technical Field

The present invention relates to a molding dope containing a polyamide having a hydroxyl-group-possessing aromatic ring, which dope exhibits optical anisotropy.

### Background Art

Being excellent in heat resistance and mechanical properties, poly-p-phenylene terephthalamide (PPTA) typified by Twaron (registered trademark) and Kevlar (registered trademark) is useful as a raw material for fibers and other molded articles. PPTA can be produced by reacting an aromatic dicarboxylic acid and an aromatic diamine in an organic solvent. PPTA can be formed into a fiber, a film or the like by dissolving a high concentration of PPTA in sulfuric acid to prepare a dope having optical anisotropy and extruding the dope into a solidifying medium (JP-A-59-137509).

Poly-p-phenylenebenzobisoxazole (PBO) typified by Zylon (registered trademark) is excellent in heat resistance and mechanical properties and is useful as a raw material for fibers and other molded articles (WO85/04178 pamphlet). PBO can be produced by polymerizing 4,6-diaminoresorcinol and terephthalic acid in polyphosphoric acid (JP-A-5-112639). PBO can be formed of a fiber, etc., by dissolving it in a specific solvent such as a mixture of polyphosphoric acid with phosphorus pentoxide. When polyphosphoric acid, or the like is used as a solvent, however, it is not easy to remove a phosphorus component by washing a formed product with water. On the other hand, PBO is not easily soluble in a strong-acidity solvent that can be easily removed by washing with water.

It is further proposed that a dope of sodium hydroxide containing a polyamide having a hydroxyl-group-possessing aromatic ring be extruded into sulfuric acid to form a product (UK Patent 1,142,071). However, this method has a defect that fibers obtained are liable to have voids, etc., since the product is rapidly formed while sodium hydroxide is neutralized in sulfuric acid.

With regard to a dope containing a polyamide, there is room left for improvements in removal of the solvent and formability as described above.

### Disclosure of the Invention

It is an object of the present invention to provide a dope containing a polyamide having a hydroxyl-group-possessing aromatic ring, which dope exhibits optical anisotropy and has excellent formability.

It is another object of the present invention to provide a dope that can be molded into a fiber, a film, etc., which are excellent in heat resistance and mechanical properties.

It is further another object of the present invention to provide a dope that permits the easy removal of a solvent after molded.

The present inventor has found that a polyamide having a hydroxyl-group-possessing aromatic ring, which is obtained by polymerizing an aromatic dicarboxylic acid component and an aromatic diamine component having a hydroxyl group in an organic solvent, is soluble in a strong-acidity solvent such as sulfuric acid, methanesulfonic acid, etc., in a high concentration. It has been further found that a dope prepared by dissolving the above polyamide in a strong-acidity solvent exhibits optical anisotropy and is excellent in formability, and the present invention has been accordingly completed.

That is, the present invention provides a dope for a molded articles which comprises a polymer containing a recurring unit of the following formula (I),

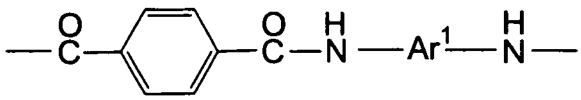

( I )

wherein $Ar^1$ is

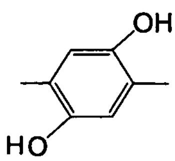

and/or

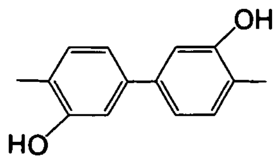

and having an inherent viscosity of 1.0 or more and a strong-acidity solvent, the dope having a polymer concentration of 5 to 30 % by weight and being a dope that exhibits optical anisotropy at 50°C.

Further, the present invention provides a process for the production of a dope, which comprises the steps of

(1) reacting an aromatic dicarboxylic acid component of the following formula (A),

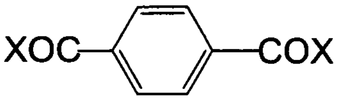

(A)

wherein X is -OH, a halogen atom or a group represented by -OR in which R is a monovalent aromatic group having 6 to 20 carbon atoms,
with an aromatic diamine component comprises 5 to 100 mol % of the following formula (B) and 95 to 0 mol% of the following formula (C),

$$H_2N—Ar^1—NH_2 \qquad (B)$$

wherein $Ar^1$ is

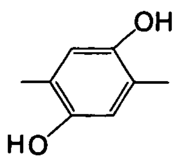

and/or

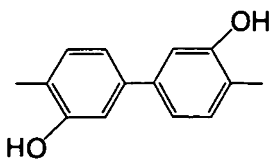

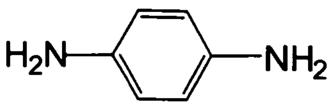

(C)

or salts thereof in an organic solvent to obtain a solution containing a polymer,
(2) bringing the solution containing a polymer into contact with a poor solvent to precipitate the polymer,
(3) drying the polymer until the polymer has a water content of 3 % by weight or less, and

(4) dissolving the thus-dried polymer in a strong-acidity solvent.

Best Mode for Embodiments of the Invention

<Dope>

The polymer contains a recurring unit of the following formula (I) and having an inherent viscosity of 1.0 or more.

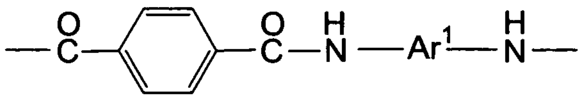

( I )

wherein $Ar^1$ is

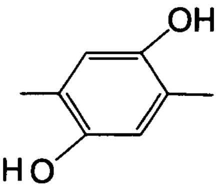

and or

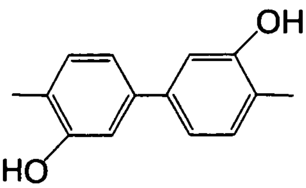

The polymer is also preferably a polymer that further contains a recurring unit of the following formula (II).

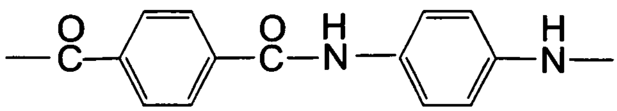

( I I )

That is, the polymer contains the recurring unit of the formula (I) whose content is preferably 5 to 100 mol%, more preferably 10 to 100 mol%, still more preferably 50 to 100 mol%, yet more preferably 70 to 100 mol% and the recurring unit of the formula (II) whose content is preferably 95 to 0 mol%, more preferably 90 to 0 mol%, still more preferably 50 to 0 mol%, yet more preferably 30 to 0 mol%.

Further, the polymer is also preferably a polymer that essentially contains the recurring unit of the formula (I) and the recurring unit of the formula (II). For example, the polymer contains the recurring unit of the formula (I) whose content is preferably 10 to 90 mol%, more preferably 50 to 90 mol%, still more preferably 70 to 90 mol% and the recurring unit of the formula (II) whose content is preferably 90 to 10 mol%, more preferably 50 to 10 mol%, still more preferably 30 to 10 mol%.

The more the content of the recurring unit of the formula (I) is, a hydroxyl group can be more reacted, the polymer structure can be more changed and physical properties can be more changed with regard to molded articles to be obtained, such as a fiber, a film, and the like, which is preferred.

The inherent viscosity of the polymer is 1.0 or more, preferably 1.5 to 40, more preferably 2.0 to 25. The polymer concentration in the dope is 5 to 30 % by weight, more preferably over 10 % by weight but not more than 25 % by weight, still more preferably 12 to 25 % by weight.

The strong-acidity solvent is preferably sulfuric acid or methanesulfonic acid. More preferably, it is concentrated sulfuric acid or methanesulfonic acid having a concentration of 98 % by weight or more or fuming sulfuric acid.

The dope exhibits optical anisotropy at 50°C. This optical anisotropy refers to a state in which a dope sandwiched between two glass plates is observed through a microscope under crossed Nicols to exhibit optical anisotropy.

<Method for production of dope>

The dope can be produced by the followings steps (1) to (4).

(Step (1))

The step (1) is a step in which an aromatic dicarboxylic acid component is reacted with an aromatic diamine component or a salt thereof in an organic solvent to obtain a polymer-containing solution.

The aromatic dicarboxylic acid component is represented by the following formula (A).

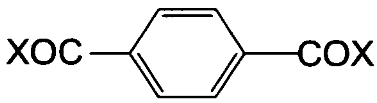

(A)

In the formula (A), X is -OH, a halogen atom or a group of -OR in which R is a monovalent aromatic group having 6 to 20 carbon atoms. The halogen atom includes a fluorine atom, a chlorine atom, a bromine atom, etc. The monovalent aromatic group having 6 to 20 carbon atoms, which is represented by R, includes a substituted or non-substituted phenyl group and a naphthyl group. Above all, terephthalic acid chloride that is a dicarboxylic acid component of the formula (A) in which X is Cl is preferred.

The aromatic diamine component contains 5 to 100 mol%, preferably 10 to 100 mol%, more preferably 50 to 100 mol% of an aromatic diamine represented by the following formula (B),

$$H_2N - Ar^1 - NH_2 \qquad (B)$$

and 95 to 0 mol%, preferably 90 to 0 mol%, more preferably 50 to 0 mol% of an aromatic diamine represented by the following formula (C).

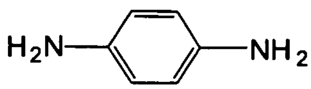

(C)

In the formula (B), $Ar^1$ is

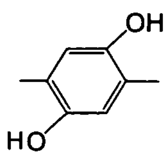

and/or

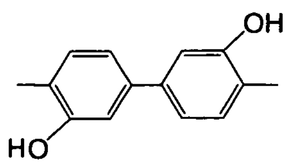

.

Further, the aromatic diamine component may have a constitution in which the aromatic diamine of the formula (B) and the aromatic diamine of the formula (C) are essential. For example, the aromatic diamine component includes an embodiment in which the aromatic diamine component contains preferably 10 to 90 mol%, more preferably 50 to 90 mol%, still more preferably 70 to 90 mol% of the aromatic diamine of the formula (B) and preferably 90 to 10 mol%, more preferably 50 to 10 mol%, still more preferably 30 to 10 mol% of the aromatic diamine of the formula (C).
The aromatic diamine component includes salts of these. The salts include hydrochloride, sulfates, phosphates and the like.
The organic solvent is not specially limited, and any solvent can be used so long as it is capable of dissolving the above raw material monomers (A) and (B) and substantially non-reactive with them and can serve to give a polymer whose inherent viscosity is preferably at least 1.0, more preferably 1.2 or more. Examples of the organic solvent include amide-containing solvents such as N,N,N',N'-tetramethylurea (TMU), N,N-dimethylacetamide (DMAC), N,N-diethylacetamide (DEAC), N,N-dimethylpropionamide (DMPR), N,N-dimethylbutylamide (NMBA), N,N-dimethylisobutylamide (NMIB), N-methyl-2-pyrrolidinone (NMP), N-cyclohexyl-2-pyrrolidinone (NCP), N-ethylpyrrolidone-2 (NEP), N-methylcaprolactam (NMC), N,N-dimethylmethoxyacetamide, N-acetylpyrrolidine (NARP), N-acetylpiperidine, N-methylpiperidone-2 (NMPD), N,N'-dimethylethyleneurea, N,N'-dimethylpropyleneurea, N,N,N',N'-tetramethylmalonamide and N-acetylpyrrolidone, phenol-containing solvents such as p-chlorophenol, phenol, m-cresol, p-cresol and 2,4-dichlorophenol and mixtures of these. Of these, N,N-dimethylacetamide (DMAC) and N-methyl-2-pyrrolidinone (NMP) are preferred.
In this case, a proper amount of a known inorganic salt may be added before or during the polymerization or at the time of completion of the polymerization, for improving the solubility. Examples of the above inorganic salt include lithium chloride and calcium chloride.
In the reaction, the polymer-containing solution can be prepared by reacting the aromatic dicarboxylic acid component and the aromatic diamine component in the organic solvent according to a solution polymerization method employed for a general polyamide. The reaction temperature in this case is adjusted to 80°C or lower, preferably to 60°C or lower. The concentration of each of the aromatic dicarboxylic acid component and the aromatic diamine component is preferably approximately 1 to 20 % by weight.
In the present invention, further, trialkylsilyl chloride can be used for higher polymerization of the polymer. For capturing acids such as hydrogen chloride generated in a reaction between acid chloride and a diamine, it is preferred to use a hydroxide or oxide of an alkali metal or alkaline earth metal such as lithium hydroxide, calcium hydroxide or calcium oxide, an aliphatic or aromatic amine or a quaternary ammonium salt. It is particularly preferred to use triethylamine since a polymer having a high molecular weight can be obtained.

(Step (2))

The step (2) is a step in which the polymer-containing solution obtained in the step (1) is brought into contact with a poor solvent to precipitate the polymer and the polymer is isolated.
The poor solvent includes water, toluene, xylene, methanol, ethanol, 1-propanol, isopropanol and acetone. The temperature of the poor solvent is preferably -10°C to 200°C.

(Step (3))

The step (3) is a step in which the polymer is dried until it comes to have a water content of 3 % by weight or less, preferably 2 % by weight or less. The drying can be carried out by the method of hot air drying, vacuum drying or freeze-drying. The water content is measured by TGA. When the water content in the polymer is over 3 % by weight, the dope is poor in formability and stability.

(Step (4))

The step (4) is a step in which the polymer dried is dissolved in a strong-acidity solvent. The thus-obtained polymer is soluble in the organic solvent used for the polymerization, only to an extent of several %, so that it is required to dissolve the isolated polymer in a strong-acidity solvent for obtaining an intended dope that exhibits optical anisotropy. The strong-acidity solvent is preferably sulfuric acid or methanesulfonic acid. It is more preferably concentrated sulfuric acid or methanesulfonic acid having a concentration of 98 % by weight or more or fuming sulfuric acid.

Examples

The present invention will be more specifically explained with reference to Examples below, while the present invention shall not be limited to these Examples. In Examples, an inherent viscosity ($\eta_{inh}$) is a value determined according to the following expression, on the basis of a relative viscosity ($\eta_{rel}$) obtained by measurement of a polymer having a

concentration of 0.5 g/dl in concentrated sulfuric acid at 30°C.

$$\eta_{inh} = (\eta_{rel})/C$$

in which $\eta_{rel}$ is a relative viscosity and C is a concentration.

For a water content, a polymer was temperature-increased from room temperature up to 200°C at a rate of 10°C/minutes with Thermo Plus TG8120 supplied by Rigaku Corporation to determine a weight loss.

Example 1

Under nitrogen current, 64.68 parts by weight of calcium chloride was dried at 250°C in a flask for 1 hour, and the temperature in the flask was decreased back to room temperature. Then, 562 parts by weight of N-methyl-2-pyrrolidinone (NMP) was added. Then, 18.75 parts by weight of 4,4'-diamino-3,3'-biphenyldiol was added and dissolved therein. While the thus-prepared solution was maintained at -10°C by externally cooling it, 17.6037 parts by weight of terephthalic acid chloride was added. The mixture was allowed to react at -10°C for 1 hour and at 50°C for 2 hours, and 6.4242 parts by weight of potassium hydroxide was added to complete the reaction.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.41 % by weight, to give a polymer having a recurring unit of the following formula (I-2). The polymer had an inherent viscosity ($\eta_{inh}$) of 5.73.

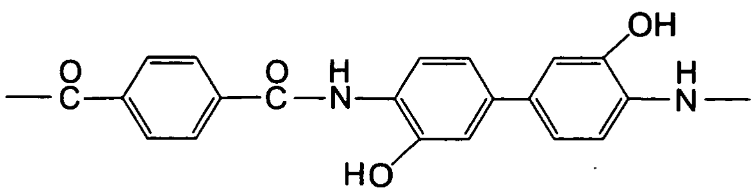

(I − 2)

The thus-obtained polymer was dissolved in concentrated sulfuric acid in a polymer concentration of 15 % by weight, to give a dope having a very high viscosity. The resultant dope was observed under crossed Nicols through a microscope to exhibit optical anisotropy at 50°C while it was allowed to stand.

Example 2

Under nitrogen current, 95 parts by weight of calcium chloride was dried at 250°C in a flask for 1 hour, and the temperature in the flask was decreased back to room temperature. Then, 1,125 parts by weight of N-methyl-2-pyrrolidinone (NMP) was added. Then, 37.5 parts by weight of 4,4'-diamino-3,3'-biphenyldiol was added and dissolved therein. While the thus-prepared solution was maintained at 0°C by externally cooling it, 35.207 parts by weight of terephthalic acid chloride was added. The mixture was allowed to react at 0°C for 1 hour and at 50°C for 2 hours.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.39 % by weight, to give a polymer having a recurring unit of the following formula (1-2). The polymer had an inherent viscosity ($\eta_{inh}$) of 6.8.

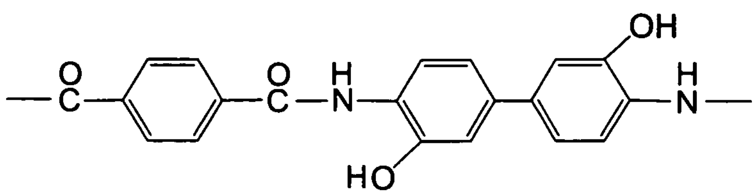

(I − 2)

The thus-obtained polymer was dissolved in concentrated sulfuric acid in a polymer concentration of 15 % by

weight, to give a dope having a very high viscosity. The resultant dope was observed under crossed Nicols through a microscope to exhibit optical anisotropy at 50°C while it was allowed to stand.

Example 3

Under nitrogen current, 34.6 parts by weight of calcium chloride was dried at 250°C in a flask for 1 hour, and the temperature in the flask was decreased back to room temperature. Then, 400 parts by weight of N-methyl-2-pyrrolidinone (NMP) was added. Then, 25 parts by weight of 4,4'-diamino-3,3'-biphenyldiol and 2.206 parts by weight of p-phenylenediamine were added and dissolved therein. While the thus-prepared solution was maintained at -10°C by externally cooling it, 27.614 parts by weight of terephthalic acid chloride was added. The mixture was allowed to react at -10°C for 1 hour and at 80°C for 2 hours.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.15 % by weight, to give a polymer having 85 mol% of a recurring unit of the following formula (1-2) and 15 mol% of a recurring unit of the following formula (II). The polymer had an inherent viscosity ($\eta_{inh}$) of 4.5.

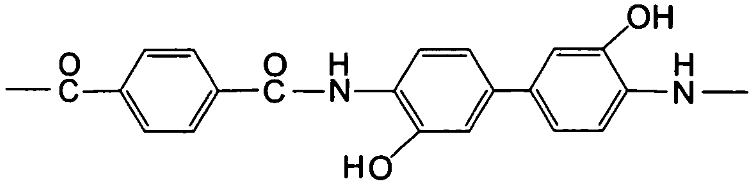

(I - 2)

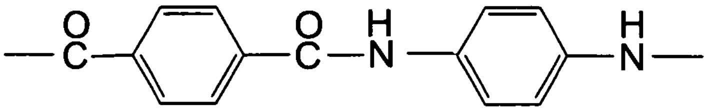

(II)

The thus-obtained polymer was dissolved in concentrated sulfuric acid in a polymer concentration of 15 % by weight, to give a dope having a very high viscosity. The resultant dope was observed under crossed Nicols through a microscope to exhibit optical anisotropy at 50°C while it was allowed to stand.

Example 4

Under nitrogen current, 264.5 parts by weight of calcium chloride was dried at 250°C in a flask for 1 hour, and the temperature in the flask was decreased back to room temperature. Then, 2,800 parts by weight of N-methyl-2-pyrrolidinone (NMP) was added. Then, 25 parts by weight of 4,4'-diamino-3,3'-biphenyldiol and 70.846 parts by weight of p-phenylenediamine were added and dissolved therein. While the thus-prepared solution was maintained at -10°C by externally cooling it, 156.477 parts by weight of terephthalic acid chloride was added. The mixture was allowed to react at -10°C for 1 hour and at 80°C for 2 hours.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.22 % by weight, to give a polymer having 15 mol% of a recurring unit of the following formula (1-2) and 85 mol% of a recurring unit of the following formula (II). The polymer had an inherent viscosity ($\eta_{inh}$) of 4.8.

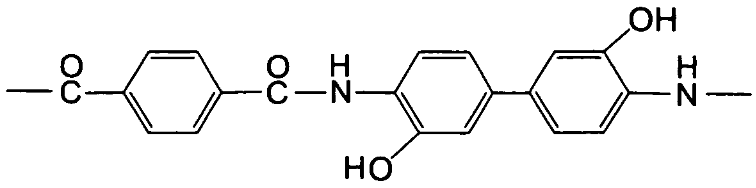

(I − 2)

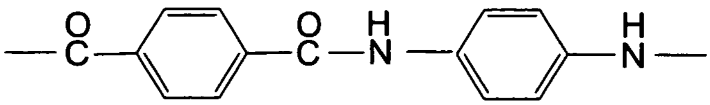

(I I)

The thus-obtained polymer was dissolved in concentrated sulfuric acid in a polymer concentration of 15 % by weight, to give a dope having a very high viscosity. The resultant dope was observed under crossed Nicols through a microscope to exhibit optical anisotropy at 50°C while it was allowed to stand.

Example 5

Under nitrogen current, 5.07 parts by weight of calcium chloride was dried at 250°C in a flask for 1 hour, and the temperature in the flask was decreased back to room temperature. Then, 80 parts by weight of N-methyl-2-pyrrolidinone (NMP) was added. Then, 4 parts by weight of 2,5-diamino-1,4-benzenediol dihydrochloride and 3.83 parts by weight of triethylamine were added and dissolved therein. While the thus-prepared solution was maintained at -10°C by externally cooling it, 3.812 parts by weight of terephthalic acid chloride was added. The mixture was allowed to react at -10°C for 1 hour and at 50°C for 2 hours.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.45 % by weight, to give a polymer having a recurring unit of the following formula (I-1). The polymer had an inherent viscosity ($\eta_{inh}$) of 2.2.

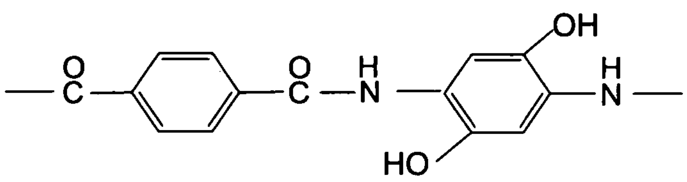

(I − 1)

The thus-obtained polymer was dissolved in concentrated sulfuric acid in a polymer concentration of 18 % by weight, to give a dope having a very high viscosity. The resultant dope was observed under crossed Nicols through a microscope to exhibit optical anisotropy at 60°C while it was allowed to stand.

Example 6

Under nitrogen current, 12.07 parts by weight of calcium chloride was dried at 250°C in a flask for 1 hour, and the temperature in the flask was decreased back to room temperature. Then, 200 parts by weight of N-methyl-2-pyrrolidinone (NMP) was added. Then, 9 parts by weight of 2,5-diamino-1,4-hydroquinone dihydrochloride and 0.806 part by weight of p-phenylenediamine were added, then, 6.682 parts by weight of pyridine was added, and these were dissolved therein. While the thus-prepared solution was maintained at 0°C by externally cooling it, 10.089 parts by weight of terephthalic acid chloride was added. The mixture was allowed to react at 0°C for 1 hour and at 80°C for 2 hours.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.33 % by weight, to give a polymer having 85 mol% of a recurring unit of the following formula (I-1) and 15 mol% of a recurring unit of the following formula (II). The polymer had an inherent viscosity

($\eta_{inh}$) of 2.9.

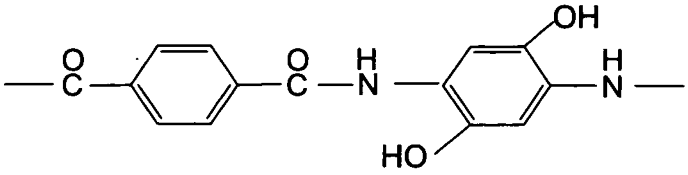

(I - 1)

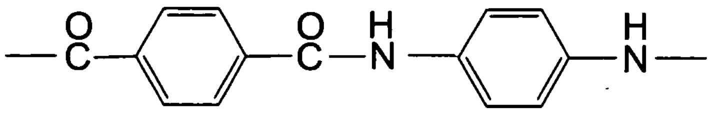

(I I)

The thus-obtained polymer was dissolved in concentrated sulfuric acid in a polymer concentration of 15 % by weight, to give a dope having a very high viscosity. The resultant dope was observed under crossed Nicols through a microscope to exhibit optical anisotropy at 50°C.

Example 7

Under nitrogen current, 22.8 parts by weight of calcium chloride was dried at 250°C in a flask for 1 hour, and the temperature in the flask was decreased back to room temperature. Then, 250 parts by weight of N-methyl-2-pyrrolidinone (NMP) was added. Then, 3 parts by weight of 2,5-diamino-1,4-hydroquinone dihydrochloride and 8.628 part by weight of p-phenylenediamine were added, then, 2.227 parts by weight of pyridine was added, and these were dissolved therein. While the thus-prepared solution was maintained at -10°C by externally cooling it, 19.057 parts by weight of terephthalic acid chloride was added. The mixture was allowed to react at -10°C for 1 hour and at 80°C for 2 hours.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.21 % by weight, to give a polymer having 15 mol% of a recurring unit of the following formula (I-1) and 85 mol% of a recurring unit of the following formula (II). The polymer had an inherent viscosity ($\eta_{inh}$) of 3.4.

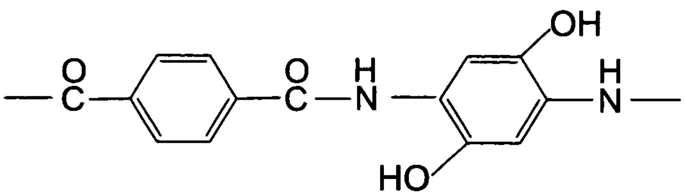

(I - 1)

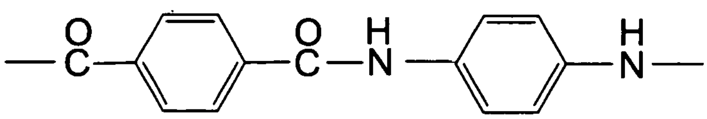

(I I)

The thus-obtained polymer was dissolved in concentrated sulfuric acid in a polymer concentration of 15 % by weight, to give a dope having a very high viscosity. The resultant dope was observed under crossed Nicols through a microscope to exhibit optical anisotropy at 50°C.

Example 8

Under nitrogen current, 38 parts by weight of calcium chloride was dried at 250°C in a flask for 1 hour, and the

temperature in the flask was decreased back to room temperature. Then, 420 parts by weight of N-methyl-2-pyrrolidinone (NMP) was added. Then, 5 parts by weight of 2,5-diamino-1,4-hydroquinone dihydrochloride and 14.381 part by weight of p-phenylenediamine were added, then, 4.75 parts by weight of triethylamine was added, and these were dissolved therein. While the thus-prepared solution was maintained at 0°C by externally cooling it, 31.763 parts by weight of terephthalic acid chloride was added. The mixture was allowed to react at 0°C for 1 hour and at 80°C for 2 hours.

Then, the reaction solution was poured into a large amount of ion-exchanged water to precipitate a polymer. The thus-obtained polymer was recovered by filtering, further washed with ethanol and acetone and then vacuum-dried until it came to have a water content of 1.32 % by weight, to give a polymer having 15 mol% of a recurring unit of the following formula (I-1) and 85 mol% of a recurring unit of the following formula (II). The polymer had an inherent viscosity ($\eta_{inh}$) of 4.8.

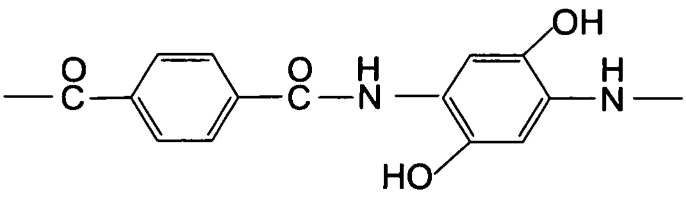

(I-1)

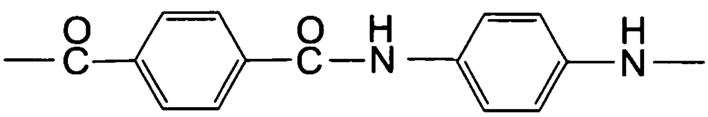

(II)

The thus-obtained polymer was dissolved in concentrated sulfuric acid in a polymer concentration of 15 % by weight, to give a dope having a very high viscosity. The resultant dope was observed under crossed Nicols through a microscope to exhibit optical anisotropy at 50°C.

Effect of the Invention

The dope of the present invention exhibits optical anisotropy, has the property of molecular orientation when simply extruded into a solidifying medium and can give molded articles such as fibers and films. Molded articles such as fibers and films obtained from the dope of the present invention are excellent in heat resistance and mechanical properties. Containing a high concentration of a polyamide, the dope of the present invention is easily spinnable into fibers. Containing a hydroxyl group, molded articles such as fibers and films obtained from the dope of the present invention can be modified in polymer structure by reacting the hydroxyl group and hence can be changed in physical properties.

Industrial Utility

Fibers spun from the dope of the present invention is excellent in heat resistance, strength and elasticity and can be widely applied to fields of ropes, belts, electrically insulating cloths, reinforcing materials for thermosetting or thermoplastic resins and further protective clothing.

## Claims

1. A dope for a molded article which comprises a polymer containing a recurring unit of the following formula (I),

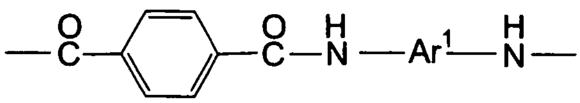

(I)

wherein $Ar^1$ is

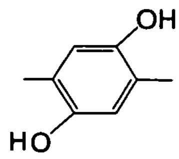

and/or

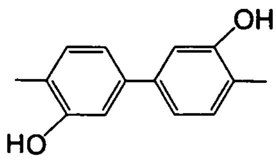

and having an inherent viscosity of 1.0 or more and a strong-acidity solvent, the dope having a polymer concentration of 5 to 30 % by weight and being a dope that exhibits optical anisotropy at 50°C.

**2.** The dope of claim 1, wherein the strong-acidity solvent is sulfuric acid or methanesulfonic acid.

**3.** The dope of claim 1, wherein the polymer concentration is over 10 % by weight but not more than 25 % by weight.

**4.** The dope of claim 1, wherein the polymer has 5 to 100 mol% of a recurring unit of the following formula (I),

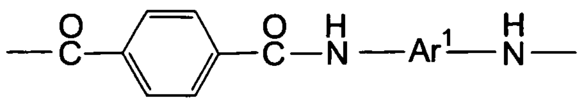

(I)

wherein $Ar^1$ is

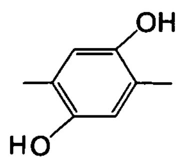

and/or

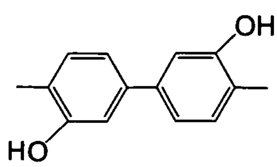

and 95 to 0 mol% of a recurring unit of the following formula (II),

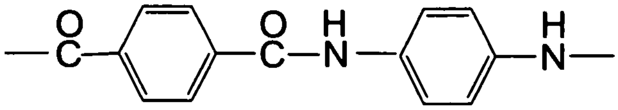

(I I) .

5. The dope of claim 4, wherein the polymer has 10 to 100 mol% of the recurring unit of the formula (I) and 90 to 0 mol% of the recurring unit of the formula (II).

6. The dope of claim 4, wherein the polymer has 50 to 100 mol% of the recurring unit of the formula (I) and 50 to 0 mol% of the recurring unit of the formula (II).

7. A process for the production of a dope, which comprises the steps of

(1) reacting an aromatic dicarboxylic acid component of the following formula (A),

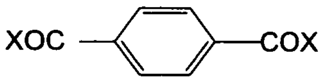

(A)

wherein X is -OH, a halogen atom or a group represented by -OR in which R is a monovalent aromatic group having 6 to 20 carbon atoms, with an aromatic diamine component comprising 5 to 100 mol % of the following formula (B) and 95 to 0 mol% of the following formula (C),

$$H_2N-Ar^1-NH_2 \qquad (B)$$

wherein $Ar^1$ is

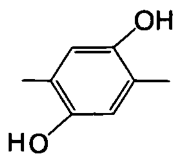

and/or

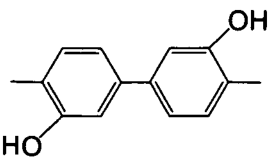

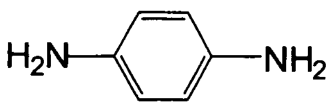

(C)

or salts thereof in an organic solvent to obtain a solution containing a polymer,
(2) bringing the solution containing a polymer into contact with a poor solvent to precipitate the polymer,
(3) drying the polymer until the polymer has a water content of 3 % by weight or less, and
(4) dissolving the thus-dried polymer in a strong-acidity solvent.

**8.** The process of claim 7, wherein the organic solvent is N,N-dimethylacetamide (DMAC) or N-methyl-2-pyrrolidinone (NMP).

**9.** The process of claim 7, wherein the poor solvent is water.

**10.** The process of claim 7, wherein the strong-acidity solvent is sulfuric acid or methanesulfonic acid.

**INTERNATIONAL SEARCH REPORT**

International application No.
PCT/JP2006/310605

A. CLASSIFICATION OF SUBJECT MATTER
*C08L77/10*(2006.01)i, *D01F6/60*(2006.01)i, *C08G69/32*(2006.01)i, *C08K5/42*(2006.01)i

According to International Patent Classification (IPC) or to both national classification and IPC

B. FIELDS SEARCHED

Minimum documentation searched (classification system followed by classification symbols)
C08L77/10, D01F6/60, C08G69/32, C08K5/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2004-107621 A (Porima Tekku Kabushiki Kaisha), 08 April, 2004 (08.04.04), Claims & US 2005-0249961 A & EP 1384743 A1 | 1-10 |
| A | JP 59-137509 A (E.I. Du Pont De Nemours & Co.), 07 August, 1984 (07.08.84), Claims & US 3869429 A & GB 1393011 A & FR 2134582 A | 1-10 |
| A | JP 63-199262 A (Sekisui Chemical Co., Ltd.), 17 August, 1988 (17.08.88), Claims (Family: none) | 1-10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 July, 2006 (28.07.06) | 08 August, 2006 (08.08.06) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 59137509 A
- WO 8504178 A
- JP 5112639 A
- GB 1142071 A